# EUROPÄISCHE PATENTSCHRIFT

(11) **EP 2 163 781 B1**
(45) Veröffentlichungstag und Bekanntmachung des Hinweises auf die Patenterteilung: **24.04.2013**
(21) Anmeldenummer: 09009593.6
(22) Anmeldetag: 24.07.2009
(51) Int. Cl.: F16F 1/36

(54) **Federanordnung**
Spring arrangement
Agencement de ressort

(30) Priorität: 13.09.2008 DE 102008047023
(43) Veröffentlichungstag der Anmeldung: 17.03.2010
(73) Patentinhaber: Jungheinrich Aktiengesellschaft, 22047 Hamburg (DE)
(72) Erfinder: Draheim, Pierre, 22455 Hamburg (DE); Krenzin, Marcel, 24576 Bad Bramstedt (DE)
(74) Vertreter: Hauck Patent- und Rechtsanwälte

(56) Entgegenhaltungen:
- EP-A2- 0 919 404
- BE-A- 683 075
- JP-A- 56 043 029
- JP-A- 59 140 935
- JP-A- 60 201 132

## Beschreibung

Die Erfindung bezieht sich auf eine Federanordnung nach Patentanspruch 1.

EP 0 919 404 A2 beschreibt eine Vorrichtung für Stützräder an einem Stapler. An jeder Seite eines steuerbaren Lenkrades ist ein Stützrad vorgesehen, wobei jedes Stützrad durch eine Feder gegen den Boden gepresst wird. Ein Hebel ist mit dem Hubzylinder des Gabelstaplers verbunden. Durch den Hebel wird eine der Vorspannung der Feder entgegenwirkende Kraft übermittelt, die proportional zur Hubkraft der Last ist, so dass ein erhöhter Anpressdruck erreicht wird für die Antriebsräder, wenn die Last erhöht ist. Zugleich wird der Anpressdruck der Stützräder reduziert.

Federn zeichnen sich bekanntlich durch ihre Federkonstante bzw. ihre Kennlinie aus. Man unterscheidet zwischen Zug-, Druck- und Drehfedern mit linearer, progressiver und degressiver Federcharakteristik.

Federanordnungen werden häufig bei Fahrwerken von Fahrzeugen eingesetzt, unter anderem auch bei Flurförderzeugen, um die Übertragung von Stößen an den Rädern auf das Chassis abzumildern und/oder bei Kurvenfahrt gute Seitenstabilität zu gewährleisten. Es ist bekannt, die Fahrwerksfedern abhängig von Betriebsparametern vorzuspannen. Wenn vor- und nachstehend von Betriebsparametern die Rede ist, sind neben der Last z.B. Lenkwinkel, Beschleunigung/Verzögerung, Neigungswinkel, Lasthöhe, Fahrzeugseitenneigung usw. gemeint. Der Arbeits-bereich verschiebt sich somit entlang der Federkennlinie. Bei linearen Federn bleibt die Federcharakteristik in jedem Arbeitsbereich konstant, bei progressiven und degressiven Federn ändert sich jedoch die Federcharakteristik je nach Lage des Arbeitsbereiches auf der Federkennlinie und somit die Abhängigkeit der eingeleiteten Federvorspannung. Bei einem Fahrwerk mit Stützrollen (Flurförderzeug) bedeutet einer Erhöhung der Stützrollenlast eine Verminderung der Antriebsradlast, was unerwünscht ist.

Häufig besteht aber der Wunsch, die Federkennlinie von Betriebsparametern abhängig zu machen, beispielsweise von der Last auf einem Flurförderzeug.

Daher liegt der Erfindung die Aufgabe zu Grunde, ein Flurförderzeug mit einer Federanordnung zu schaffen, bei dem abhängig von einem Betriebsparameter die Federcharakteristik geändert werden kann, insbesondere ohne dabei die Federvorspannkraft zu variieren.

Diese Aufgabe wird durch die Merkmale des Patentanspruchs 1 gelöst.

Bei der erfindungsgemäßen Federanordnung eines Flurförderzeugs sind dem Federelement Mittel zugeordnet, die beim Aufbringen einer Axialkraft auf das Federelement zumindest über einen Teil der axialen Länge des Federelements seine radiale Ausdehnung begrenzen. Alternativ wird der radialen Ausdehnung ein Widerstand entgegengesetzt.

Wird zum Beispiel ein Federelement aus einem elastomeren Material in seiner radialen Ausdehnung begrenzt, kann eine weitere Ausdehnung des Federelements nur noch in axiale Richtung stattfinden. Auf diese Weise wird die Federkennlinie des Elements geändert.

Nach einer Ausgestaltung der Erfindung ist mit den Mitteln zur Erzeugung eines Widerstandes oder einer Begrenzung für das Federelement eine Verstelleinrichtung gekoppelt. Diese kann ihrerseits von einem Betriebsparameter gesteuert werden. Mit Hilfe der Steuereinrichtung und erfindungsgemäßen Federanordnung lässt sich daher das Federverhalten des Federelements in Grenzen variieren, beispielsweise an die Last des Flurförderzeugs anzupassen.

Es sind verschiedene konstruktive Möglichkeiten denkbar, das Federelement in seiner Federcharakteristik zu beeinflussen. Eine Ausgestaltung der Erfindung sieht hierzu vor, dass die Mittel mindestens zwei Flächenelemente aufweisen, die sich auf gegenüberliegenden Seiten des Federelements annähernd parallel zu diesem über mindestens einen Teil seiner axialen Länge erstrecken, wobei die Federelemente von der Verstelleinrichtung so betätigbar sind, dass ihr radialer Abstand zum Federelement verändert wird. Das Federelement ist dabei an einer Ausdehnung bei Belastung über ein bestimmtes Maß hinaus gehindert und kann sich zum Beispiel nur in axialer Richtung verformen.

Nach einer weiteren Ausgestaltung hierzu ist erfindungsgemäß vorgesehen, dass die Flächenelemente zwei Halbschalen aufweisen, die an einem Ende aneinander angelenkt und mit den anderen Enden mit der Verstellvorrichtung verbunden sind, wodurch der Abstand der anderen Enden voneinander einstellbar ist. Auch hierdurch kann die Ausdehnung des Federelements in radialer Richtung variabel begrenzt werden.

In einer anderen Ausgestaltung der Erfindung ist vorgesehen, dass die Mittel einen Mantel aufweisen, der das Federelement zumindest über einen Teil seiner axialen Länge umgibt und mit der Verstelleinrichtung die relative axiale Lage von Mantel und Federelement veränderbar ist. Mit Hilfe des Mantels lässt sich der Bereich, der bei einer Belastung des Federelements radial ausgedehnt werden kann, verändern.

In einer dritten Ausgestaltung der Erfindung ist vorgesehen, dass die Mittel ein Gehäuse aufweisen, das das Federelement annähernd abgedichtet aufnimmt und dessen Inneres mit einer Fluidquelle unter Druck verbunden ist, wobei mit der Verstelleinrichtung der Druck im Gehäuse einstellbar ist. Das Fluid kann ein Gas oder eine Flüssigkeit sein. Bei dieser Ausgestaltung wird der Vorteil erhalten, dass ein reibungsloses Medium das Federelement umgibt, wodurch ein Abrieb des Federelements verhindert wird.

Die erfindungsgemäße Federanordnung des Flurförderzeugs ist insbesondere für ein Rad des Flurförderzeugs verwendbar, insbesondere für ein Stützrad, wobei mit Hilfe der Verstelleinrichtung das Federverhalten am Stützrad abhängig von einem oder mehreren Betriebsparametern beeinflussbar ist.

Die Erfindung wird nachfolgend anhand von Zeichnungen näher erläutert.
- Figur 1: zeigt eine erste Ausführungsform der erfindungsgemäßen Federanordnung.
- Figur 2: zeigt eine zweite Ausführungsform einer erfindungsgemäßen Federanordnung.
- Figur 3: zeigt eine dritte Ausführungsgemäßen einer erfindungsgemäßen Federanordnung.
- Figur 4: zeigt eine vierte Ausführungsform einer erfindungsgemäßen Federanordnung.

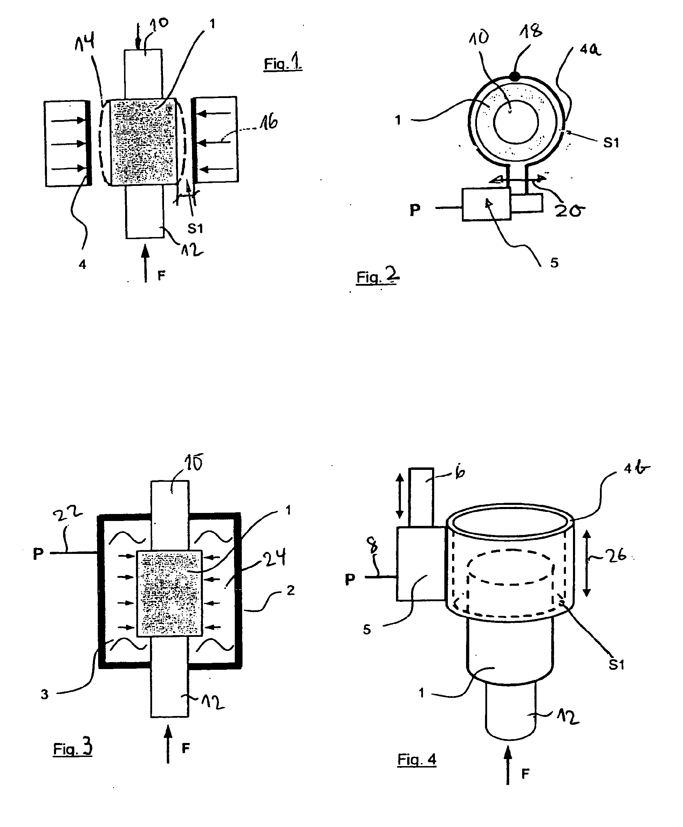

In den Figuren 1 bis 4 ist ein zylindrisches Federelement 1 dargestellt, das zum Beispiel aus einem geeigneten Elastomer gefertigt ist. Das Federelement 1 ist an den entgegengesetzten Seiten mit einem Stutzen 10 bzw. 12 verbunden (siehe Figuren 1 bis 3). Der Stutzen 10 ist zum Beispiel mit dem Chassis eines Fahrwerks, beispielsweise eines Flurförderzeugs verbunden, während der Stutzen (12) zum Beispiel mit einem Rad, insbesondere einem Stützrad des Fahrzeugs verbunden ist. Die auf das Federelement 1 einwirkenden Kräfte sind mit F bezeichnet. Bei einer axialen Beaufschlagung ergibt sich eine radiale Ausdehnung des Federelements, wie gestrichelt bei 14 gezeichnet (Figur 1). Auf gegenüberliegenden Seiten des Federelements 1 sind Flächenelemente 4 angeordnet, die einen Abstand S1 zum Federelement aufweisen. Sie erstrecken sich annähernd über die Höhe des Federelements 1. Wie durch die Pfeile 16 angedeutet, können die Flächenelemente 16 radial auf das Federelement 1 zu oder von diesem fort eingestellt werden, um die Spaltbreite S1 zu erhöhen oder zu verringern. Entsprechend bilden die Flächenelemente 4 eine Begrenzung für die radiale Ausdehnung des Federelements 1. Eine derartige Begrenzung führt zu einer Veränderung der Federcharakteristik des Federelements 1 unabhängig von einer Federvorspannung.

Eine Verstelleinrichtung, mit welcher die Flächenelemente 4 verstellt werden können, ist nicht dargestellt. Diese kann zum Beispiel von einem Verstellzylinder, der hydraulisch, pneumatisch oder elektromechanisch betrieben ist, gebildet sein. Die Verstelleinrichtung wird zum Beispiel durch die Last gesteuert, welche vom Fahrzeug, zum Beispiel Flurförderzeug, transportiert wird oder auch von anderen Betriebsparametern wie Lenkwinkel etc.

In Figur 2 wird das Federelement, das anders als in Figur 1 von oben gezeigt ist, von zwei Halbschalen 4a umgeben, die an einem Ende bei 18 aneinander angelenkt und am anderen Ende mit einem Verstellzylinder 5 in Verbindung sind. Das eine Ende ist mit dem Zylinder des Verstellzylinders 5 und das andere Ende mit dem Kolben des Verstellzylinders 5 verbunden. Dadurch können die Halbschalen 4a entsprechend den Doppelpfeilen 20 mehr oder weniger geöffnet werden, um den hier variablen Spalt S1 zum Federelement 1 in seiner Größe zu verändern. Die Betätigung des Verstellzylinders 5, der mit dem Druck P beaufschlagt wird, ist wiederum abhängig von einer Steuervorrichtung, die hier nicht gezeigt ist und die die Last am Fahrzeug in ein entsprechendes Drucksignal umwandelt, um eine lastabhängige Beeinflussung der Federcharakteristik des Federelements 1 zu erzielen.

In Figur 3 ist ein abgeschlossenes Gehäuse 2 dargestellt, in welchem das Federelement 1 angeordnet ist. Die Stutzen 10, 12 sind Kolben, die sich dichtend aus dem Gehäuse 2 heraus erstrecken. Die Anordnung des Federelements 1 ist im Übrigen die gleiche wie zu den weiter oben beschriebenen Ausfiihrungsformen. Über einen Druckanschluss 22 kann ein flüssiges oder gasförmiges Fluid 24 im Gehäuse 2 unter einen entsprechenden Druck gesetzt werden. In Abhängigkeit von diesem Druck ändert sich die Federkonstante des Federelements 1, sodass druckabhängig und somit wiederum lastabhängig die Federcharakteristik des Federelements 1 eingestellt werden kann.

In Figur 4 ist um den oberen Bereich des Federelements 1 ein Ringkörper 4b herum gelegt (der obere Stutzen 10 ist in dieser Zeichnung nicht dargestellt). Der Ringkörper 4b ist mit einem Zylinder 5 oder einem elektromechanischem Stellorgan verbunden, dessen Kolbenstange 6 an einem nicht gezeigten Widerlager abgestützt ist. Durch die Zuführung von Druckmitteln mit dem Druck P über den Anschluss 8 des Verstellzylinders 5 kann mithin der Ringkörper 4b axial relativ zum Federelement 1 vertellt werden, wie durch Doppelpfeil 26 angedeutet. Mit Hilfe dieser Vorkehrung lässt sich daher ebenfalls das Federverhalten des Federelements 1 abhängig von der axialen Position des Ringkörpers 4b einstellen. Die Betätigung des Verstellzylinders 5 erfolgt wiederum zum Beispiel in Abhängigkeit von einem Betriebsparameter eines Fahrzeugs, insbesondere zum Beispiel von seiner Last.

## Patentansprüche

1. Flurförderzeug, das mindestens ein Rad, insbesondere ein Stützrad, aufweist, das gegenüber dem Chassis des Flurförderzeugs über ein Federelement abgestützt ist, das von einer variablen axialen Kraft beaufschlagt ist, **dadurch gekennzeichnet, dass** das Federelement sowohl in radialer als auch in axialer Richtung dehnbar ausgebildet ist, dass dem Federelement (1) Mittel zugeordnet sind, die beim Aufbringen einer Axialkraft zumindest über einen Teil der axialen Länge dem Federelement (1) in seiner radialen Ausdehnung einen Widerstand entgegensetzen oder das Federelement (1) in seiner radialen Ausdehnung begrenzen, wobei die den Widerstand oder die Begrenzung erzeugenden Mittel veränderbar und von einer Verstelleinrichtung einstellbar sind und die Verstelleinrichtung von der Last bzw. dem Gewicht des Flurförderzeugs oder einem anderen Betriebsparameter gesteuert ist.

2. Flurförderung nach Anspruch 1, **dadurch gekennzeichnet, dass** das Federelement (1) ein Körper aus elastomerem Material ist.

3. Flurförderzeug nach Anspruch 1 oder 2, **dadurch gekennzeichnet, dass** die Mittel mindestens zwei Flächenelemente (4) aufweisen, die sich auf gegenüberliegenden Seiten des Federelements 1 annähernd parallel zu diesen über mindestens einen Teil seiner axialen Länge erstrecken und die Flächenelemente (4) von der Verstelleinrichtung so betätigbar sind, dass ihr radialer Abstand S1 zum Federelement (1) verändert wird.

4. Flurförderzeug nach Anspruch 3, **dadurch gekennzeichnet, dass** die Flächenelemente zwei Halbschalen (4a) aufweisen, die an einem Ende aneinander angelenkt sind und mit den anderen Enden mit der Verstelleinrichtung verbunden sind, wodurch der Abstand der anderen Enden voneinander einstellbar ist.

5. Flurförderzeug nach einem der Ansprüche 1 bis 3, **dadurch gekennzeichnet, dass** die Mittel einen Mantel (4b) aufweisen, der das Federelement (1) zumindest über einen Teil seiner axialen Länge umgibt und mit der Verstelleinrichtung die relative axiale Lage von Mantel (4b) und Federelement (1) veränderbar ist.

6. Flurförderzeug nach einem der Ansprüche 1 bis 3, **dadurch gekennzeichnet, dass** die Mittel ein Gehäuse (2) aufweisen, die das Federelement (1) annähernd abgedichtet aufnimmt, das Innere des Gehäuses (2) mit einer Fluidquelle unter Druck verbindbar ist und mit der Verstelleinrichtung der Druck im Gehäuse (2) einstellbar ist.

7. Flurförderzeug nach Anspruch 6, **dadurch gekennzeichnet, dass** das Fluid ein Gas oder eine Flüssigkeit ist.

## Claims

1. An industrial truck which has at least one wheel, a support wheel in particular, which is supported with respect to the chassis of the industrial truck by way of a spring element to which a variable axial force is applied, **characterised in that** the spring element is configured to be expandable in the radial as well as in the axial direction, that means are associated to the spring element (1) which exert a drag against the spring element (1) in its radial expansion or limit the spring element (1) in its radial expansion across at least a part of the axial length when an axial force is applied, wherein the means generating the drag or the limitation are alterable and adjustable by an adjusting equipment, and the adjusting equipment is controlled by the load or the weight of the industrial truck or by another parameter of operation.

2. The industrial truck according to claim 1, **characterised in that** the spring element (1) is a body formed from an elastomeric material.

3. An industrial truck according to claim 1 or 2, **characterised in that** the means have at least two surface elements (4) which extend on opposing sides of the spring element (1), approximately parallel to the same and across at least a part of its axial length, and that the surface elements (4) can be actuated by the adjusting equipment such that their radial distance S 1 to the spring element (1) is changed.

4. The industrial truck according to claim 3, **characterised in that** the surface elements have two half-shells (4a) which are hinged to each other at one end and are connected to the adjusting equipment with the other ends, whereby the distance of the other ends from each other can be adjusted.

5. An industrial truck according to any one of claims 1 to 3, **characterised in that** the means have a jacket (4b) which surrounds the spring element (1) across at least a part of its axial length, and that the relative axial position of jacket (4b) and spring element (1) can be altered by means of the adjusting equipment.

6. An industrial truck according to any one of claims 1 to 3, **characterised in that** the means have a casing (2) which accommodates the spring element (1) in an approximately sealed manner, the interior of the casing (2) can be connected to a pressurized fluid source and the pressure in the casing (2) can be adjusted with the adjusting equipment.

7. The industrial truck according to claim 6, **characterised in that** the fluid is a gas or a liquid.

## Revendications

1. Chariot de manutention qui a au moins une roue, notamment une roue de support, qui est supportée par rapport au châssis du chariot de manutention par l'intermédiaire d'un élément de ressort auquel une force axiale variable est appliquée, **caractérisé en ce que** l'élément de ressort est réalisé de façon dilatable dans la direction radiale aussi bien que dans la direction axiale, que des moyens sont associés à l'élément de ressort (1) qui rebondissent une résistance contre l'élément de ressort (1) dans sa dilatation radiale ou limitent l'élément de ressort (1) dans sa dilatation radiale à travers au moins une part de son longueur axiale quand une force axiale est appliquée, les moyens qui génèrent la résistance ou la limitation étant altérables et ajustables par un équipement d'ajustage, et l'équipement d'ajustage étant commandé par la charge ou le poids du chariot de manutention ou par un autre paramètre de fonction.

2. Chariot de manutention selon la revendication 1, **caractérisé en ce que** l'élément de ressort (1) est un corps formé par un matériau élastomère.

3. Chariot de manutention selon la revendication 1 ou 2, **caractérisé en ce que** lesdits moyens ont au moins deux éléments de surface (4) qui s'étendent sur des côtés opposés de l'élément de ressort (1), approximativement en parallèle à ceci et à travers au moins une part de son longueur axiale, et que les éléments de surface (4) peuvent être actionnés par l'équipement d'ajustage de sorte que leur distance radiale SI à l'élément de ressort (1) est changée.

4. Chariot de manutention selon la revendication 3, **caractérisé en ce que** les éléments de surface ont deux semi-coques (4a) articulées l'une à l'autre dans une extrémité, et sont reliées à l'équipement d'ajustage par les autres extrémités, par quoi la distance des autres extrémités l'une de l'autre peut être ajustée.

5. Chariot de manutention selon l'une quelconque des revendications 1 à 3, **caractérisé en ce que** les moyens ont une enveloppe (4b) qui entoure l'élément de ressort (1) à travers au moins une part de son longueur axiale, et la position axiale relative d'enveloppe et élément de ressort (1) peut être altérée par l'équipement d'ajustage.

6. Chariot de manutention selon l'une quelconque des revendications 1 à 3, **caractérisé en ce que** les moyens ont un boîtier (2) qui reçoit l'élément de ressort (1) d'une manière approximativement étanche, l'intérieur du boîtier (2) peut être raccordé à une source de fluide sous pression et la pression dans le boîtier (2) peut être ajustée par l'équipement d'ajustage.

7. Chariot de manutention selon la revendication 6, **caractérisé en ce que** le fluide est un gaz ou un liquide.
